(19) Europäisches Patentamt
European Patent Office
Office européen des brevets

(11) **EP 4 741 440 A1**

(12) **EUROPEAN PATENT APPLICATION**
published in accordance with Art. 153(4) EPC

(43) Date of publication:
**13.05.2026 Bulletin 2026/20**

(21) Application number: **24836246.9**

(22) Date of filing: **26.06.2024**

(51) International Patent Classification (IPC):
*C08G 63/91* *(2006.01)*

(52) Cooperative Patent Classification (CPC):
**C08G 63/91**

(86) International application number:
**PCT/KR2024/008850**

(87) International publication number:
**WO 2025/009798 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.07.2023 KR 20230087615**

(71) Applicant: **LG Chem, Ltd.**
**Seoul 07336 (KR)**

(72) Inventors:
• **LEE, Doyun**
 **Daejeon 34122 (KR)**
• **WOO, Won Hee**
 **Daejeon 34122 (KR)**
• **OH, Wan Kyu**
 **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PREPARING POLYLACTIC ACID RESIN WITH IMPROVED MELTABILITY AND REACTIVITY**

(57) A polylactic acid resin according to the present disclosure and a method for preparing the same have the feature that the melt index can be increased and the flowability can be improved through a simple method of treating a polylactic acid resin with water. Thereby, it is also possible to improve the reactivity of the polylactic acid resin and improve the compatibility with various additives, thereby further expanding the application fields of the polylactic acid resin.

[FIG. 2]

Linear vs. Branch

—— B
----- B + Branching agent

EP 4 741 440 A1

**Description**

**[TECHNICAL FIELD]**

CROSS-REFERENCE TO RELATED APPLICATION(S)

This application claims the benefit of Korean Patent Application No. 10-2023-0087615 filed on July 6, 2023 in the Korean Intellectual Property Office, the disclosure of which is incorporated herein by reference in its entirety.

The present disclosure relates to a polylactic acid resin with improved meltability and reactivity and a method for preparing the same.

**[BACKGROUND]**

Polylactic acid (PLA) is a plant-derived resin obtained from plants such as corn, and is receiving attention as an excellent eco-friendly material due to its biodegradable properties. Unlike petroleum-based resins such as polystyrene resins, polyvinyl chloride resins, or polyethylene resins, which are currently used, polylactic acid has effects of preventing depletion of petroleum-based resources and suppressing carbon dioxide emissions, and therefore, may reduce environmental pollution, which is a disadvantage of petroleum-based plastic products.

As environmental pollution caused by waste plastics and the like has emerged as social problems, efforts have been made to expand the application range of polylactic acid to various fields, including food packing materials and containers, electronic product cases, etc., to which general plastics (petroleum-based resins) have been applied.

Polylactic acid has a diverse range of melt index(MI) required according to the product to be produced. Among them, polylactic acid with a high melt index may be required, and for example, polylactic acid with a high melt index (500-3000 g/10 min@230°C) is required to produce melt-blown nonwoven fabrics. However, since the melt index of the polylactic acid generally prepared by a commercial process has the range of 5 to 200 g/10 min (as measured at 230 °C under 2.16 kg according to ASTM D1238), polymerization of a polylactic acid with high melt index described above is not easy by conventional methods.

There are various reasons why polymerization of polylactic acid with high flowability is difficult, but typically, a process of removing volatile substances such as residual monomers after polymerization of a polylactic acid (devolatilization process) is essentially included, but there is a problem that part of a polylactic acid with high flowability may evaporate together, which may make the process not smooth, and it is difficult to form pellets during the pelletizing process. In addition, the polylactic acid synthesized by a conventional polymerization method has low acid value, which limits post-processing and/or modification. For example, there is a problem that reaction with chain extenders or branching agents is decreased.

Therefore, the present inventors have conducted extensive research to solve the above problems, and as a result, found that by treating the prepared polylactic acid with distilled water as described below, it is possible to increase the melt index and simultaneously improve its flowability, thereby preparing a polylactic acid with high flowability, and completed the present disclosure.

**[DETAILED DESCRIPTION OF THE INVENTION]**

**[Technical Problem]**

It is an object of the present disclosure to provide a polylactic acid resin with improved meltability and reactivity and a method for preparing the same.

**[Technical Solution]**

In order to achieve the above object, according to the present disclosure, there is provided a polylactic acid resin having the following features:

a melt index of 300 to 3000 g/10 min, as measured at 230 °C under 2.16 kg according to ASTM D1238,
an acid value of 20 to 100 mmol acid/kg, and
an inorganic impurity content of 100 mg/kg or less.

The polylactic acid resin according to the present disclosure is characterized by increasing the melt index and simultaneously improving the flowability by the preparation method described below, and the polylactic acid resin is also characterized in that it contains almost no inorganic impurities because no other chemicals or catalysts are used in the preparation method.

Preferably, the weight average molecular weight of the polylactic acid resin is 50,000 to 100,000.

Preferably, the melt index is 400 g/10 min or more, 500 g/10 min or more, 600 g/10 min or more, 700 g/10 min or more, 800 g/10 min or more, 900 g/10 min or more, or 1000 g/10 min or more; and 2900 g/10 min or less, 2800 g/10 min or less, 2700 g/10 min or less, 2600 g/10 min or less, 2500 g/10 min or less, 2400 g/10 min or less, 2300 g/10 min or less, 2200 g/10 min or less, 2100 g/10 min or less, or 2000 g/10 min or less.

Preferably, the acid value is 30 mmol acid/kg or more; 90 mmol acid/kg or less, 80 mmol acid/kg or less, 70 mmol acid/kg or less, or 60 mmol acid/kg or less.

Preferably, the inorganic impurity is Sn and P, and the total content of Sn and P is 85 mg/kg or less. In addition, preferably, the inorganic impurity is Na, Zn, Ti, Al, Ag, Mg, Mn, Ba, Ca, Co, Cr, Cu, Fe, Ga, K, Li, Ni, Sb, Sr, V, and Zr, and the total content of Na, Zn, Ti, Al, Ag, Mg, Mn, Ba, Ca, Co, Cr, Cu, Fe, Ga, K, Li, Ni, Sb, Sr, V, and Zr is 10 mg/kg or less.

In addition, according to the present disclosure, there is provided a method for preparing the above-mentioned polylactic acid resin, the method comprising the steps of:

immersing the polylactic acid resin in water (step 1);
maintaining the temperature of water in the step 1 at 65 to 99°C (step 2); and
recovering the polylactic acid resin from water (step 3).

The present disclosure is characterized in that, through a simple method for treating polylactic acid, which is generally prepared by a commercial process, with water, it is possible to increase the melt index of the polylactic acid and simultaneously improve its flowability. Hereinafter, the present disclosure will be described in detail step by step.

**(Step 1)**

Step 1 of the present disclosure is a step of immersing the polylactic acid resin in water, which is a step of preparing the hydrolysis of the polylactic acid.

The polylactic acid resin used in the step 1 is generally prepared by a commercialized process, and preferably has a melt index of 5 to 200 g/10 min (as measured at 230 °C under 2.16 kg according to ASTM D1238). In other words, the present disclosure prepares a polylactic acid resin with high flowability by hydrolyzing a general polylactic acid resin with low flowability as described below, instead of polymerizing a polylactic acid resin with high flowability.

Preferably, a weight average molecular weight of the polylactic acid resin used in the step 1 is 100,000 to 250,000. More preferably, the weight average molecular weight of the polylactic acid resin is 110,000 or more; and 240,000 or less, 230,000 or less, 220,000 or less, 210,000 or less, 200,000 or less, 190,000 or less, 180,000 or less, 170,000 or less, 160,000 or less, or 150,000 or less.

Preferably, the melt index of the polylactic acid resin of the step 1 (as measured at 230 °C under 2.16 kg according to ASTM D1238) is 10 g/10 min or more, 20 g/10 min or more, 30 g/10 min or more, 40 g/10 min or more, 50 g/10 min or more, 60 g/10 min or more, 70 g/10 min or more, 80 g/10 min or more, 90 g/10 min or more, or 100 g/10 min or more; and 190 g/10 min or less, 180 g/10 min or less, 170 g/10 min or less, 160 g/10 min or less, 150 g/10 min or less, or 140 g/10 min or less.

Preferably, the water is distilled water. Preferably, the weight ratio of the polylactic acid resin and water in the step 1 is 1:0.1 to 1:10. More preferably, the weight ratio of the polylactic acid resin and water in the step 1 is 1:0.2 or more, 1:0.3 or more, or 1:0.4 or more; and 1:9 or less, 1:8 or less, 1:7 or less, 1:6 or less, 1:5 or less, 1:4 or less, 1:3 or less, 1:2 or less, or 1:1 or less.

On the other hand, since the polylactic acid resin is added to water, it is preferably used in the form of pellets. The pellets are not particularly limited as long as they have a shape widely used in the technical field to which the present disclosure pertains.

**(Step 2)**

Step 2 of the present disclosure is a step of maintaining the temperature of water in the step 1 at 65 to 99°C, which is a step of hydrolyzing the polylactic acid resin.

The 'hydrolyzing polylactic acid resin' means hydrolyzing a part of polylactic acid resin, and in particular, hydrolyzing a part of a polylactic acid resin with low flowability. This improves the flowability of the polylactic acid resin as a whole.

Preferably, the temperature of the water in the step 1 is maintained at 66 °C or more, 67 °C or more, 68 °C or more, 69 °C or more, or 70 °C or more; and 98 °C or less, 98 °C or less, 97 °C or less, 96 °C or less, 95 °C or less, 94 °C or less, 93 °C or less, 92 °C or less, or 91 °C or less.

Preferably, the step 2 is carried out under a normal pressure. The normal pressure means 1 atm $\pm$ 0.1 atm.

Preferably, the step 2 is carried out for 0.5 to 24 hours. If the time required for carrying out the step is less than 0.5 hours, the hydrolysis occurs too little and the improvement in flowability is slight. Conversely, if the time required for carrying out the step is more than 24 hours, there is a problem that the hydrolysis occurs too much and the flowability is too higher. More preferably, the step 2 is carried out for 1 hour or more; and 22 hours or less, 20 hours or less, 18 hours or less, 16 hours or less, 14 hours or less, 12 hours or less, or 10 hours or less.

**(Step 3)**

Step 3 of the present disclosure is a step of recovering the polylactic acid resin from water after the treatment of the step 2.

Since the polylactic acid resin has been in contact with high-temperature water for a long time, it is preferably cooled at a fast rate. Therefore, the polylactic acid resin recovered in the step 3 is preferably cooled to 10 °C to 20 °C . For this purpose, it is preferable to bring it into contact with cold water of 10 °C or less.

Further, for subsequent finishing of the polylactic acid resin, it is preferable to sufficiently remove even small amounts of water, and for this purpose, it is preferable to dry under reduced pressure. Preferably, it is preferable to dry so that the moisture content of the polylactic acid resin becomes 100 ppmw or less.

The drying method is not particularly limited, but as an example, it is preferable to dry under reduced pressure at 25 °C to 35 °C until the moisture content of the polylactic acid resin becomes 5,000 ppmw or less, and then dry under reduced pressure at 80 to 90 °C until the moisture content becomes 100 ppmw or less. If the moisture content exceeds 5,000 ppmw, hydrolysis may further progress when drying under reduced pressure at 80 to 90 °C, and there is also a problem that it takes too long for the moisture content to reach 100 ppmw when drying under reduced pressure at 25°C to 35 °C.

The polylactic acid resin recovered in the step 3 is characterized by increasing the melt index and improving the flowability compared to a polylactic acid resin before treatment.

Preferably, the weight average molecular weight of the polylactic acid resin recovered in the step 3 is 50,000 to 100,000.

Preferably, the melt index of the polylactic acid resin recovered in the step 3 is 300 to 3000 g/10 min (as measured at 230 °C under 2.16 kg according to ASTM D1238).

Preferably, the preparation method according to the present disclosure satisfies the following Mathematical Formula 1:

$$[\text{Mathematical Formula 1}]$$

$$3.0 \leq MI_1/MI_0 \leq 24$$

wherein in Mathematical Formula 1,
$MI_0$ is the melt index of the polylactic acid resin of the step 1 (as measured at 230 °C under 2.16 kg according to ASTM D1238), and
$MI_1$ is the melt index of the polylactic acid resin recovered in the step 3 (as measured at 230 °C under 2.16 kg according to ASTM D1238).

Preferably, the preparation method according to the present disclosure satisfies the following Mathematical Formula 2:

$$[\text{Mathematical formula 2}]$$

$$4.5 \leq MI_1/MI_0 \leq 24$$

wherein in the Mathematical Formula 2, $MI_0$ and $MI_1$ are as defined in Mathematical Formula 1.

**[Advantageous Effects]**

As set forth above, a preparation method according to the present disclosure have the feature that the melt index can be increased and the flowability can be improved through a simple method of treating a polylactic acid resin with water.

## [BRIEF DESCRIPTION OF THE DRAWINGS]

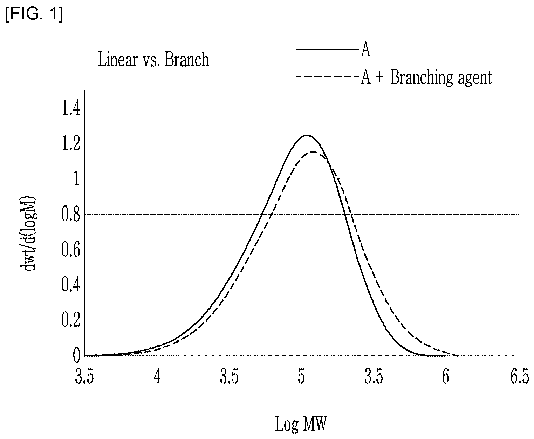

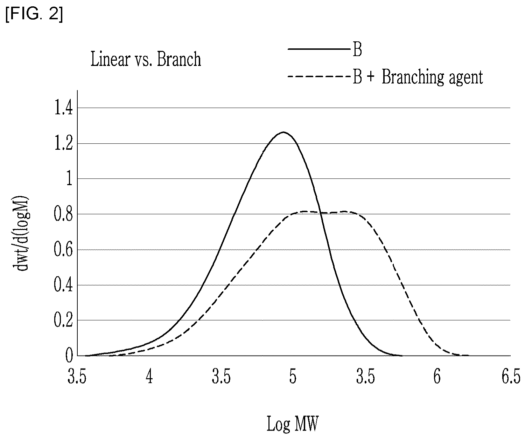

FIGS. 1 and 2 show the results of Experimental Examples of the present disclosure.

## [DETAILED DESCRIPTION OF THE EMBODIMENTS]

Hereinafter, exemplary embodiments of the present disclosure will be described in more detail with reference to the following examples. However, the following examples are provided for illustrative purposes only, and the scope of the present disclosure is not intended to be limited thereby.

In the following examples and experimental examples, each physical property was measured as follows

- Flowability (MI; melt index): measured at 230 °C under 1.2 kg according to ASTM D1238.
- Acid value measurement: Polylactic acid resin (1.5 g) was sufficiently dissolved in $CHCl_3$ (60 mL), and then titrated with 0.01 N KOH in EtOH solution to measure and convert the acid value of each resin. At this time, the unit of acid value was [mmol Acid/kg PLA]. Specifically, the membrane portion (opaque white portion) of the electrode and the titration solution tube were set to be always immersed in the solution. The acid value of the polylactic acid resin was calculated by converting the amount of KOH used.
- Weight average molecular weight (Mw), number average molecular weight (Mn), and molecular weight distribution (PDI, polydispersity index): The weight average molecular weight and the number average molecular weight were measured by calibrating with PC standard using Agilent 12000 series GPC. In addition, the value obtained by dividing the weight average molecular weight by the number average molecular weight was calculated as the molecular weight distribution (PDI).

### Example 1

Polylactic acid (Mw: 116,700; PDI: 1.88, MI: 120 g/10 min) pellets (30 kg) were placed in a 50 L SUS container A and vacuum-dried overnight at 110°C. At this time, the shape of the pellets was a spherical or egg shape with a diameter of 3 mm to 5 mm.

Distilled water (15 kg) of 95 °C was added to a container A containing vacuum-dried pellets, and the mixture was stirred and then placed in an oven preheated to the same temperature as the added distilled water, and maintained for 2.5 hours. After completion, excess water of 10 °C or less was poured into a container A containing the mixture, and the mixture was rapidly cooled to 10-20 °C. The cooled pellets were separated from the water using a strainer, and then dried under reduced pressure at 30 °C for 8 to 24 hours so that the moisture content became 5,000 ppm or less. Then, the pellets having a moisture content of 5,000 ppm or less were dried under reduced pressure at 85 °C for 8 to 24 hours so that the moisture content became 100 ppm or less. The weight average molecular weight, molecular weight distribution, MI, and acid value of the obtained pellets were measured, and shown in Table 1 below.

### Examples 2 to 4

The polylactic acid pellets were treated in the same manner as in Example 1, except that the temperature of the distilled water and/or the time maintained in the oven were changed as shown in Table 1 below.

### Comparative Example

Polylactic acid (Mw: 116,700; PDI: 1.88, MI: 120 g/10 min) pellets that were not separately treated were used as comparative examples.

### Experimental Example 1

The weight average molecular weight, molecular weight distribution, MI, and acid value were measured for the pellets obtained according to Examples and Comparative Example, and shown in Table 1 below.

[Table 1]

| | Distilled water treatment time (h) | Distilled water treatment temperature (°C) | MI (g/10 min) | Acid value (mmol acid/kg PLA) | Mw (g/mol) | PDI |
|---|---|---|---|---|---|---|
| Example 1 | 2.5 | 95 | 1500 | 55 | 60,000 | 1.86 |

(continued)

|  | Distilled water treatment time (h) | Distilled water treatment temperature (°C) | MI (g/10 min) | Acid value (mmol acid/kg PLA) | Mw (g/mol) | PDI |
|---|---|---|---|---|---|---|
| Example 2 | 1.5 | 95 | 650 | 42 | 72,000 | 1.90 |
| Example 3 | 1.0 | 95 | 450 | 35 | 77,000 | 1.92 |
| Example 4 | 2.5 | 90 | 400 | 30 | 83,300 | 1.89 |
| Comparative Example | 0 | - | 120 | 10 | 116,700 | 1.88 |

**Experimental Example 2**

The polylactic acid pellets of Comparative Example (hereinafter referred to as 'A') and 2 phr of ADR-4468 (branching agent, BASF) were mixed at 200°C and 60 rpm for 5 minutes using a Brabender mixer. In addition, the polylactic acid pellets obtained in Example 4 (hereinafter referred to as 'B') and 2 phr of ADR-4468 (branching agent, BASF) were mixed at 200°C and 60 rpm for 5 minutes using a Brabender mixer.

The weight average molecular weight, PDI, and MI were measured for each prepared melt, and the results are shown in Table 2 and FIGS. 1 and 2 below.

[Table 2]

| Sample | MI (g/10 min) | Mw (g/mol) | PDI | Mw increase rate due to addition of branching agent [1] |
|---|---|---|---|---|
| A | 120 | 116,700 | 1.88 | - |
| A + Branching agent 2phr | 66 | 141,700 | 2.00 | 21 % |
| B | 400 | 83,300 | 1.89 | - |
| B + Branching agent 2phr | 31 | 202,900 | 2.53 | 144 % |
| 1) Mw change rate (%) due to addition of branching agent = (Mw after addition of branching agent- Mw before addition of branching agent/( Mw before addition of branching agent) | | | | |

As shown in Table 2 and FIG. 1, the sample A is a polylactic acid resin that has not been treated with distilled water according to the present disclosure, and its Mw increases by about 123% due to the addition of a branching agent, whereas the sample B is a polylactic acid resin that has been treated with distilled water according to the present disclosure, and its Mw increases by about 244% due to the addition of a branching agent, thereby confirming that the reactivity of the polylactic acid treated according to the present disclosure with a branching agent is significantly improved.

**Experimental Example 3**

The inorganic impurity content of the polylactic acid pellets obtained in Examples 1 to 4 was measured by the following method.

The analysis was performed using an inductively coupled plasma optical emission spectrometer (ICP-OES), wherein scandium (Sc) was used as an internal standard, and an RF power of 1300 W, a plasma gas flow of 15.00 L/min, a sample gas flow of 0.8 L/min, and an auxiliary gas flow of 0.20 L/min were applied.

The results are shown in Table 3 below.

[Table 3]

|  | Content (mg/Kg)** | | | |
|---|---|---|---|---|
|  | Sn* | P* | Na, Zn, Ti, Al, Ag, Mg, Mn, Ba, Ca, Co, Cr, Cu, Fe, Ga, K, Li, Ni, Sb, Sr, V, Zr | Total content |
| Example 1 | 20 | 50 | < 5 | < 75 |
| Example 2 | 30 | 50 | <5 | < 85 |
| Example 3 | 20 | 60 | <5 | < 85 |

(continued)

| | Content (mg/Kg)** | | | |
|---|---|---|---|---|
| | Sn* | P* | Na, Zn, Ti, Al, Ag, Mg, Mn, Ba, Ca, Co, Cr, Cu, Fe, Ga, K, Li, Ni, Sb, Sr, V, Zr | Total content |
| * Sn and P are components resulting from the catalyst and stabilizer used in PLA polymerization. ** Analysis results using ICP-OES. | | | | |

As shown in Table 3, the polylactic acid according to the present disclosure uses hydrolysis, does not use other chemicals or catalysts, thereby being characterized in that it contains almost no inorganic impurities.

**Experimental Example 4**

A nonwoven fabric was produced from the polylactic acid pellets obtained in Examples 1 to 3 and Comparative Examples by the following method, and the results were evaluated.

Each polylactic acid pellet was heated and extruded, transferred to a nozzle, and passed through an orifice with a diameter of 0.2 mm and a number of 32 per inch to spin fibers. A meltblown nonwoven fabric having an average fiber diameter of 15 $\mu$m or less was formed by the high-temperature and high-speed gas sprayed from the nozzle around the nozzle during the spinning, and the process temperature at this time was as shown in Table 4 below. The diameter of the nonwoven fiber was analyzed using a scanning electron microscope (SEM).

The results are shown in Table 4 below.

[Table 4]

| | Process temperature (°C) | | Nonwoven evaluation results | |
|---|---|---|---|---|
| | Nozzle | hot-air | Weight(g/m$^2$) | Fiber diameter (nm) |
| Example 1 | 220 | 250 | 40 | 2.0 |
| | 230 | 260 | | 1.8 |
| Example 2 | 220 | 240 | 40 | 2.1 |
| | | | | 2.1 |
| | | | 20 | 1.5 |
| | | | | 1.5 |
| Example 3 | 240 | 260 | 30 | 2.2 |
| Comparative Example | 250 | 270 | 40 | 10.2 |
| | 270 | 270 | | 6.1 |

As shown in Table 4, it was confirmed that the polylactic acid according to the present disclosure has a low MI and can be made into ultrafine fibers during the melt blowing process.

**Claims**

1. A polylactic acid resin having the following features:

   a melt index of 300 to 3000 g/10 min, as measured at 230 °C under 2.16 kg according to ASTM D1238,
   an acid value of 20 to 100 mmol acid/kg, and
   an inorganic impurity content of 100 mg/kg or less.

2. The polylactic acid resin according to claim 1, wherein:
   a weight average molecular weight of the polylactic acid resin is 50,000 to 100,000.

3. The polylactic acid resin according to claim 1, wherein:
   the melt index is 300 to 2000 g/10 min.

4. The polylactic acid resin according to claim 1, wherein:
the acid value is 30 to 100 mmol acid/kg.

5. The polylactic acid resin according to claim 1, wherein:

the inorganic impurity is Sn and P, and
the total content of Sn and P is 85 mg/kg or less.

6. The polylactic acid resin according to claim 1, wherein:

the inorganic impurity is Na, Zn, Ti, Al, Ag, Mg, Mn, Ba, Ca, Co, Cr, Cu, Fe, Ga, K, Li, Ni, Sb, Sr, V, and Zr, and
the total content of Na, Zn, Ti, Al, Ag, Mg, Mn, Ba, Ca, Co, Cr, Cu, Fe, Ga, K, Li, Ni, Sb, Sr, V, and Zr is 10 mg/kg or less.

7. A method for preparing the polylactic acid resin as set forth in any one of claims 1 to 6, the method comprising the steps of:

immersing the polylactic acid resin in water (step 1);
maintaining the temperature of water in the step 1 at 65 to 99 °C (step 2); and
recovering the polylactic acid resin from water (step 3).

8. The method according to claim 7, wherein:
a melt index of the polylactic acid resin of the step 1 is 5 to 200 g/10 min (as measured at 230 °C under 2.16 kg according to ASTM D1238).

9. The method according to claim 7, wherein:
a weight ratio between the polylactic acid resin and water in the step 1 is 1:0.1 to 1:10.

10. The method according to claim 7, wherein:
the temperature of water in the step 2 is maintained at 70 to 99 °C.

11. The method according to claim 7, wherein:
the step 2 is carried out under a normal pressure.

12. The method according to claim 7, wherein:
the step 2 is carried out for 0.5 to 24 hours.

13. The method according to claim 7,
satisfying the following Mathematical Formula 1:

[Mathematical Formula 1]

$$3.0 \leq MI_1/MI_0 \leq 24$$

wherein in Mathematical Formula 1,

$MI_0$ is the melt index of the polylactic acid resin of the step 1 (as measured at 230 °C under 2.16 kg according to ASTM D1238), and
$MI_1$ is the melt index of the polylactic acid resin recovered in the step 3 (as measured at 230 °C under 2.16 kg according to ASTM D1238).

14. The method according to claim 1, wherein:
a weight average molecular weight of the polylactic acid resin of the step 1 is 100,000 to 250,000.

[FIG. 1]

[FIG. 2]

Linear vs. Branch

———— B

------ B + Branching agent

## INTERNATIONAL SEARCH REPORT

| International application No. |
|---|
| **PCT/KR2024/008850** |

| A. | CLASSIFICATION OF SUBJECT MATTER |
|---|---|
| | **C08G 63/91**(2006.01)i |

According to International Patent Classification (IPC) or to both national classification and IPC

| B. | FIELDS SEARCHED |
|---|---|

Minimum documentation searched (classification system followed by classification symbols)

C08G 63/91(2006.01); B29B 11/10(2006.01); C08G 63/00(2006.01); C08G 63/08(2006.01); C08L 67/04(2006.01); D04H 1/00(2006.01); D04H 1/435(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리락트산 수지(polylactic acid), 용융지수(melt flow index), 산도 (acidity), 무기 불순물(inorganic impurity), 물(water), 침지(immersion)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2009-0087517 A (KIMBERLY-CLARK WORLDWIDE, INC.) 18 August 2009 (2009-08-18) See paragraphs [0003], [0032]-[0037], [0042]-[0046], [0094] and [0101]; claim 1; and tables 1-3. | 1-14 |
| A | KR 10-2009-0031801 A (KIMBERLY-CLARK WORLDWIDE, INC.) 30 March 2009 (2009-03-30) See entire document. | 1-14 |
| A | KR 10-2023-0030406 A (CORESHTECH CO., LTD.) 06 March 2023 (2023-03-06) See entire document. | 1-14 |
| A | KR 10-2245848 B1 (ECOL GREEN TEC CO., LTD. et al.) 28 April 2021 (2021-04-28) See entire document. | 1-14 |
| A | US 2010-0048081 A1 (TOPOLKARAEV, Vasily A. et al.) 25 February 2010 (2010-02-25) See entire document. | 1-14 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 October 2024** | **07 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/008850**

| Patent document cited in search report | | | Publication date (day/month/year) | Patent family member(s) | | | Publication date (day/month/year) |
|---|---|---|---|---|---|---|---|
| KR | 10-2009-0087517 | A | 18 August 2009 | CN | 101563391 | A | 21 October 2009 |
| | | | | CN | 101563391 | B | 18 April 2012 |
| | | | | EP | 2064261 | A1 | 03 June 2009 |
| | | | | US | 2010-0048082 | A1 | 25 February 2010 |
| | | | | WO | 2008-073101 | A1 | 19 June 2008 |
| KR | 10-2009-0031801 | A | 30 March 2009 | EP | 2041346 | A1 | 01 April 2009 |
| | | | | EP | 2041346 | A4 | 05 May 2010 |
| | | | | EP | 2041346 | B1 | 21 December 2011 |
| | | | | KR | 10-1297865 | B1 | 19 August 2013 |
| | | | | US | 2009-0311937 | A1 | 17 December 2009 |
| | | | | US | 9091004 | B2 | 28 July 2015 |
| | | | | WO | 2008-008074 | A1 | 17 January 2008 |
| KR | 10-2023-0030406 | A | 06 March 2023 | None | | | |
| KR | 10-2245848 | B1 | 28 April 2021 | None | | | |
| US | 2010-0048081 | A1 | 25 February 2010 | CN | 101563392 | A | 21 October 2009 |
| | | | | CN | 101563392 | B | 13 February 2013 |
| | | | | JP | 2010-513594 | A | 30 April 2010 |
| | | | | KR | 10-1343735 | B1 | 19 December 2013 |
| | | | | WO | 2008-073099 | A1 | 19 June 2008 |

Form PCT/ISA/210 (patent family annex) (July 2022)

**EP 4 741 440 A1**

**Patent documents cited in the description**

- KR 1020230087615